# EUROPEAN PATENT APPLICATION

(11) **EP 2 957 398 A1**
(43) Date of publication of application: **23.12.2015**
(21) Application number: 14751481.4
(22) Date of filing: 14.02.2014
(51) Int. Cl.: B25J 9/22, B25J 13/02

(54) **ROBOT PENDANT**

(30) Priority: 15.02.2013 JP 2013027948
(71) Applicant: Kabushiki Kaisha Kobe Seiko Sho (Kobe Steel, Ltd.), Kobe-shi, Hyogo 651-8585 (JP)
(72) Inventor: ONE Tsutomu, Hyogo 651-2271 (JP); INADA Shuichi, Kanagawa 251-8551 (JP); FUKUNAGA Atsushi, Kanagawa 251-8551 (JP); WADA Takashi, Hyogo 651-2271 (JP)
(74) Representative: Müller-Boré & Partner Patentanwälte PartG mbB
(86) International application number: PCT/JP2014/053538
(87) International publication number: WO 2014/126221

(57) **Abstract**

The teach pendant (3) is provided with an arranged button section (31) in which multiple operation buttons (B1 - B12) for setting operation instruction information for a welding robot (2), on the tip of which a welding tool (6) is installed, are disposed. The teach pendant gives movement instructions to the welding robot (2) as a result of operation instruction information being set using the operation buttons (B1 - B12). The arranged button section (31) arranges the multiple operation buttons (B1 - B12) in directions that correspond to the welding tool (6) movement directions, which are based on movement instructions to the welding robot (2) resulting from the operation instruction information.

## Description

### Technical Field

The present invention relates to teach pendants for manipulating articulated robots.

### Background Art

In a welding robot that automatically performs welding on a workpiece, a tool equipped with, for example, a welding torch is attached to the tip portion (flange) of the welding robot, which is an example of an articulated robot. A controller (control device) that controls the operation of such an articulated robot is connected to a teach pendant (manipulating device) for manipulating the articulated robot.

A teach pendant can be operated by being manually held by an operator and actually causes the articulated robot to operate mainly by manual operation so as to be used for teaching, for example, the movement path and the position of the tool relative to the workpiece. When the operator is to perform teaching by using the teach pendant, the operator stands near the robot and operates keys of the teach pendant while watching the movement of the tool tip so as to make the tool (tool tip) move in a desired direction in a robot coordinate system set to the articulated robot.

Patent Literature 1 discloses a programming pendant (teach pendant) used for performing teaching operation of a robot. The programming pendant in Patent Literature 1 has an impedance controller that generates a target-position correction amount of an arm of a robot, which performs an assembly process by moving a component gripped by a hand of the arm into contact with a component to which the aforementioned component is to be joined, based on an output from a force sensor provided at the hand. The programming pendant is connected to a control device that feedback-controls the arm to a position obtained by adding the target-position correction amount to preliminarily-taught teach data. A movement command input by an operator pressing on command input means at the time of teaching is sent to the control device, thereby causing the robot to operate.

As shown in Figs. 2 and 6 in Patent Literature 1, the programming pendant in Patent Literature 1 is provided with buttons used for instructing the robot to move in a three-dimensional orthogonal coordinate system having X, Y, and Z axes, which is a robot coordinate system.

### Citation List

### Patent Literature

PTL 1: Japanese Unexamined Patent Application Publication No. 2007-136588

### Summary of Invention

### Technical Problem

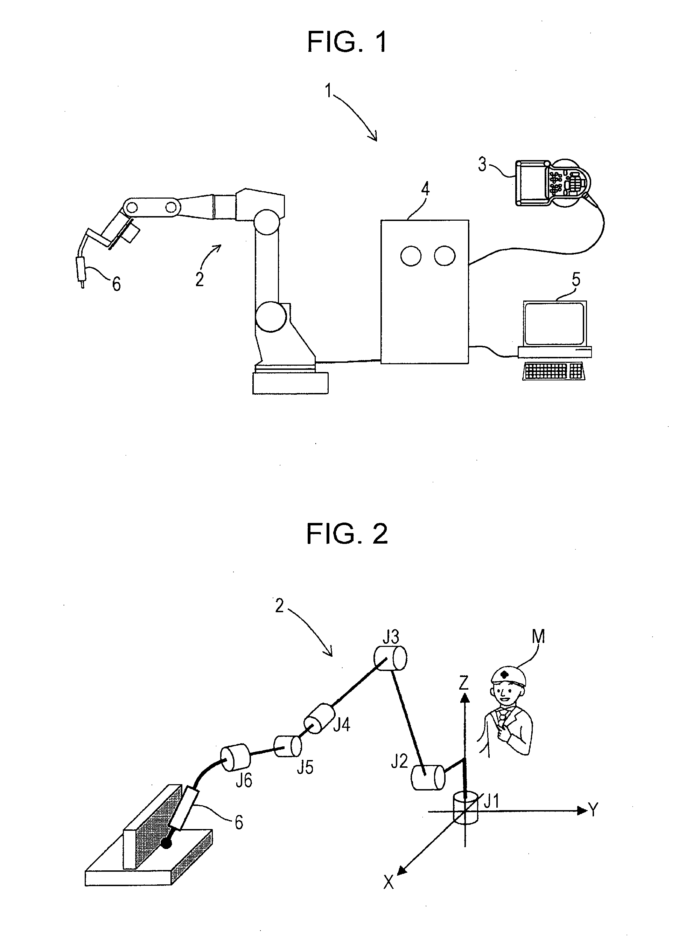

In the programming pendant disclosed in Patent Literature 1, buttons used for setting X-axis movement instructions in the three-dimensional orthogonal coordinate system having the X, Y, and Z axes are arranged in the left-right direction in the plane of the drawing in each of Figs. 2 and 6. Furthermore, buttons used for setting Y-axis and Z-axis movement instructions are also arranged in the left-right direction, similar to the buttons used for setting the X-axis movement instructions.

Therefore, when using the programming pendant in Patent Literature 1, the operator has to determine which coordinate axis of the robot coordinate system corresponds to the movement direction of the robot. Otherwise, the operator cannot properly operate the keys of the programming pendant. Therefore, for example, the robot teaching process using the programming pendant requires skill. An operator who is not used to a programming pendant or an operator operating a new programming pendant with a different layout of buttons due to, for example, a facility renewal has to spend a long time for the teaching process and is forced to do very tiresome low-productivity labor.

In view of the aforementioned problem, an object of the present invention is to provide a teach pendant that can reliably instruct an articulated robot to move without requiring experience or skill of an operator.

### Solution to Problem

In order to achieve the aforementioned object, the present invention provides the following technical solutions.

A teach pendant according to the present invention includes an arranged button section having a plurality of buttons disposed therein for setting operation instruction information for an articulated robot on a tip of which a tool is attached. The teach pendant gives a movement instruction to the articulated robot as a result of the operation instruction information being set using the buttons. The plurality of buttons in the arranged button section are arranged in directions that correspond to movement directions of the tool or an arm, which are based on movement instructions given to the articulated robot in accordance with the operation instruction information.

The plurality of buttons may be capable of setting the operation instruction information to the articulated robot in either one of a linear inching mode for instructing a movement direction of the tool and an axial inching mode for instructing a movement direction of each joint axis of the articulated robot. The plurality of buttons in the arranged button section may be arranged in the directions that correspond to the movement directions of the tool or the arm whether the operation instruction information is set in accordance with either one of the linear inching mode and the axial inching mode.

Furthermore, the plurality of buttons in the arranged button section may be arranged in the directions that correspond to the movement directions of the tool, which extend along an X axis and a Y axis of coordinates set in the articulated robot.

Moreover, the arranged button section may include two buttons that are arranged along the X axis and are for setting operation instruction information corresponding to movement of the tool along the X axis, and two buttons that are arranged along the Y axis and are for setting operation instruction information corresponding to movement of the tool along the Y axis. The two buttons arranged along the X axis and the two buttons arranged along the Y axis may be arranged in a cross-shaped pattern.

### Advantageous Effects of Invention

By using the teach pendant according to the present invention, an articulated robot can be instructed to move without requiring experience or skill of an operator.

### Brief Description of Drawings

[Fig. 1] Fig. 1 is a schematic configuration diagram of an articulated robot system including a teach pendant according to an embodiment of the present invention.
[Fig. 2] Fig. 2 illustrates shafts of an articulated robot and base coordinates set in the articulated robot system according to this embodiment.
[Fig. 3] Fig. 3 illustrates an operation surface of the teach pendant that constitutes the articulated robot system according to this embodiment.
[Fig. 4] Fig. 4 illustrates another example of the operation surface of the teach pendant that constitutes the articulated robot system according to this embodiment.

### Description of Embodiments

An articulated robot system 1 (which will simply be referred to as "robot system 1" hereinafter) according to an embodiment of the present invention will be described below with reference to the drawings. In the embodiment to be described below, identical components in the robot system 1 will be given the same reference character and the same name. Therefore, with regard to components given the same reference character and the same name, the same description thereof will not be repeated.

First, the overall configuration of the robot system 1 according to this embodiment will be described with reference to Fig. 1.

As shown in Fig. 1, the robot system 1 includes a welding robot 2, a control device 4 having a teach pendant 3 used as, for example, a teaching pendant, and a personal computer 5.

The welding robot 2 is a vertical-articulated six-axis industrial robot (articulated manipulator), and the tip thereof is provided with a flange to which a welding tool 6 constituted of, for example, a welding torch is attached. The welding robot 2 may alternatively be mounted on a slider (not shown) that holds and moves the welding robot 2.

The control device 4 outputs a movement instruction to the welding robot 2 based on operation instruction information that is output from the teach pendant 3 and that instructs a movement direction of the welding robot 2. Furthermore, the control device 4 controls the movement of the welding robot 2 by outputting the movement instruction for the welding robot 2 in accordance with a preliminarily taught program (teaching program). The operation instruction information is set by operating an operation button provided at the teach pendant 3.

The teaching program may created by using the teach pendant 3 connected to the control device 4 or may be created by using an offline teaching system that utilizes the personal computer 5. In either case, the teaching program is preliminarily created before the welding robot 2 actually performs a welding process, and instructs the welding robot 2 to move during the welding process. A teaching program created offline by the personal computer 5 is delivered to the control device 4 via, for example, a medium having data magnetically or electrically stored therein or is transferred to the control device 4 by data communication.

The personal computer 5, that is, an offline teaching system, includes a graphically-displayable display as a display device and also includes a keyboard or a mouse as an input device. Moreover, the personal computer 5 is provided with a reading device or a communication device for loading CAD information of a workpiece.

As described above, in the robot system 1 according to this embodiment, a teaching program is created by using the teach pendant 3 or the personal computer 5. This teaching-program creating process is called a teaching process. In addition to this teaching process, when manipulating the welding robot 2, an operator M holding the teach pendant 3 performs operation while standing outside the operating range of the welding tool 6.

The present invention is characterized by the layout of operation buttons of the teach pendant 3 for manipulating the welding robot 2. Before describing this teach pendant 3 in detail, the movement of the welding robot 2 (axial inching mode or a linear inching mode) that can be instructed by using the teach pendant 3 will be described first.

The relationship between the line of vision of the operator M and the movement direction of the welding tool 6 will be described with reference to Fig. 2. Fig. 2 illustrates the arrangement of a workpiece, the welding robot 2, and the operator M when a tip point (welding point) of the welding tool 6 (TCP: tool center point) is positionally moved on the workpiece. In other words, Fig. 2 is a diagram illustrating coordinates (e.g., base coordinates) set in the robot system 1 and shafts of the articulated robot.

Although base coordinates are set in the robot system 1 in this case, for example, slider coordinates set to a slider, positioner coordinates set to a positioner, or operation-line coordinates set to operation lines of the welding robot 2 may be set in the robot system 1 as an alternative to the base coordinates.

In many cases, as shown in Fig. 2, the operator M manipulates the welding robot 2 while standing behind the welding robot 2, which is at the opposite side of the direction in which the welding tool 6 of the welding robot 2 is oriented. In other words, the operator M views the welding tool 6 from behind the welding robot 2 in an X-axis direction of a base coordinate system set to a first shaft J1, which is the base end of the welding robot 2.

Therefore, with reference to the line of vision of the operator M, the front-rear direction of the operator M corresponds to the X-axis direction of the base coordinate system, the left-right direction of the operator M corresponds to a Y-axis direction of the base coordinate system, and the up-down direction of the operator M corresponds to a Z-axis direction of the base coordinate system. In the following description, a direction indicated by an arrow of the X axis will be referred to as "X-axis positive direction", and the opposite direction thereof will be referred to as "X-axis negative direction". Likewise, with regard to each of the Y axis and the Z axis, a direction indicated by an arrow will be referred to as "positive direction", and the opposite direction thereof will be referred to as "negative direction".

In detail, the operator M uses the teach pendant 3, which will be described in detail later, to instruct the welding tool 6 to move along the X, Y, and Z axes in the base coordinate system and to rotate about the first shaft J1 to a sixth shaft J6, which are joint axes of the welding robot 2, thereby setting the orientation and the tip position of the welding tool 6 as well as the orientation of the welding robot 2. A mode in which the joint axes of the first shaft J1 to the sixth shaft J6 are operated will be referred to as "axial inching mode" hereinafter.

The movement direction (operating direction) of the tip point of the welding tool 6 when the joint axes of the first shaft J1 to the sixth shaft J6 are operated will be described on the basis of the line of vision of the operator M with reference to Fig. 2.

First, when the first shaft J1 is rotated, since the welding robot 2 operates so as to rotate about the Z axis, it appears to the operator M that the tip of the welding tool 6 moves leftward and rightward in the Y-axis direction. When the second shaft J2 is rotated, since the welding robot 2 operates so as to rotate substantially about the Y axis, it appears to the operator M that the tip of the welding tool 6 moves forward and rearward in the X-axis direction.

When the third shaft J3 is rotated, since the welding robot 2 similarly operates so as to rotate substantially about the Y axis, it appears to the operator M that the tip of the welding tool 6 moves forward and rearward in the X-axis direction. When the fourth shaft J4 is rotated, since the welding robot 2 operates so as to rotate substantially about the X axis, it appears to the operator M that the tip of the welding tool 6 moves leftward and rightward in the Y-axis direction.

When the fifth shaft J5 is rotated, since the welding robot 2 operates so as to rotate substantially about the Y axis, it appears to the operator M that the tip of the welding tool 6 moves forward and rearward in the X-axis direction. When the sixth shaft J6 is rotated, since the welding robot 2 operates so as to rotate substantially about the X axis, it appears to the operator M that the tip of the welding tool 6 moves leftward and rightward in the Y-axis direction.

Accordingly, when the joint axes of the first shaft J1 to the sixth shaft J6 are operated, it appears to the operator M standing behind the welding robot 2 that the tip of the welding tool 6 moves (operates) forward and rearward or leftward and rightward substantially along the corresponding axis of the base coordinate system.

When setting the orientation of the welding robot 2, it is important to set the tip position of the welding tool 6 relative to the workpiece, which is an object to be welded. In the robot system 1 according to this embodiment, the operator M operates operation buttons (buttons) provided at the teach pendant 3 so as to operate the joint axes of the first shaft J1 to the sixth shaft J6, thereby setting the tip position of the welding tool 6. A mode in which the joint axes of the first shaft J1 to the sixth shaft J6 are operated by operating the buttons of the teach pendant 3 in this manner is the "axial inching mode".

In addition to this "axial inching mode", the robot system 1 according to this embodiment has a "linear inching mode". Because the tip position of the welding tool 6 is set in accordance with the "linear inching mode" more frequently than the above-described "axial inching mode", the "linear inching mode" will be described below in detail.

The "linear inching mode" is a mode in which the tip of the welding tool 6 is linearly moved parallel to the X, Y, and Z axes of the base coordinate system. In the linear inching mode, when the operator operates the operation buttons provided at the teach pendant 3 to instruct movement in, for example, the positive direction or the negative direction of the X axis, the tip of the welding tool 6 linearly moves parallel to the X axis without changing its Y or Z coordinates other than the X coordinate. Accordingly, in the linear inching mode, when movement in the positive direction or the negative direction of the Y axis is instructed, the tip of the welding tool 6 linearly moves parallel to the Y axis, or when movement in the positive direction or the negative direction of the Z axis is instructed, the tip of the welding tool 6 linearly moves parallel to the Z axis.

When the tip of the welding tool 6 is to be moved in the linear inching mode, the control device 4 controls the orientation of the welding robot 2 so as to move the tip of the welding tool 6 without changing the orientation of the welding tool 6.

Furthermore, in the linear inching mode, the orientation of the welding tool 6 can also be changed without changing the coordinates (X, Y, and Z coordinates) of the tip of the welding tool 6.

Specifically, the welding tool 6 can be rotated in the direction extending about the X axis, the Y axis, or the Z axis with reference to the tip of the welding tool 6 as the center. In this case, when the welding tool 6 is rotated in the direction extending about the X axis, it appears to the operator M standing behind the welding robot 2 that the welding tool 6 moves in the left-right direction along the Y axis. Likewise, with reference to the line of vision of the operator M, when the welding tool 6 is rotated in the direction extending about the Y axis, it appears that the welding tool 6 moves in the front-rear direction along the X axis. When the welding tool 6 is rotated in the direction extending about the Z axis, it appears that the welding tool 6 moves in the left-right direction along the Y axis.

In this case, the control device 4 controls the orientation of the welding robot 2 so as to rotate the welding tool 6 without changing the tip position of the welding tool 6.

As described above, the welding tool 6 can be operated in the axial inching mode and the linear inching mode by operating the operation buttons provided at the teach pendant 3. In both of the axial inching mode and the linear inching mode, it can be considered that the welding tool 6 operates or moves in the front-rear direction extending along the X axis of the base coordinate system, the left-right direction extending along the Y axis, or the up-down direction extending along the Z axis with reference to the line of vision of the operator M standing behind the welding robot 2.

In the teach pendant 3 of the robot system 1 according to this embodiment, multiple operation buttons for setting operation instruction information, which is based on a movement instruction output to the welding robot 2 by the control device 4 in the axial inching mode and the linear inching mode, are arranged in directions that correspond to the actual movement directions of the welding tool 6.

Specifically, in the teach pendant 3 according to this embodiment, operation buttons for setting operation instruction information for operating the welding tool 6 in the front-rear direction extending along the X axis of the base coordinate system are arranged in the front-rear direction extending along the X axis of the base coordinate system of the teach pendant 3. Moreover, in the teach pendant 3, operation buttons for setting operation instruction information for operating the welding tool 6 in the left-right direction extending along the Y axis of the base coordinate system are arranged in the left-right direction extending along the Y axis of the base coordinate system of the teach pendant 3.

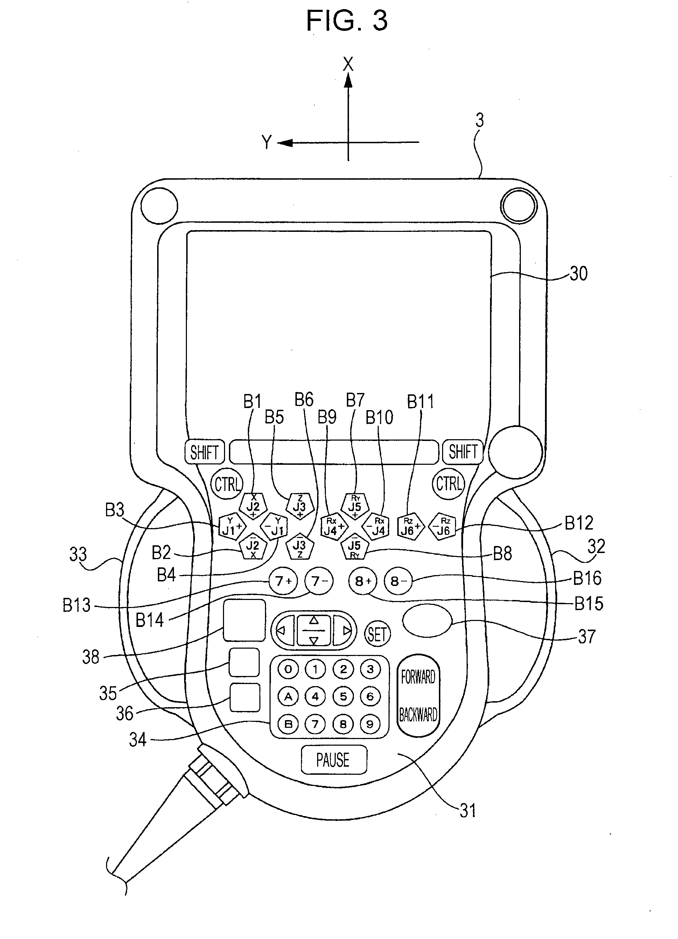

The configuration of the teach pendant 3 according to this embodiment will be described in detail below with reference to Fig. 3. Fig. 3 illustrates an operation surface of the teach pendant 3 according to this embodiment. In the following description, the terms "left and right" in the plane of the drawing in Fig. 3 correspond to left and right in the width direction (i.e., the direction extending along the Y axis) of the teach pendant 3, and the terms "up and down" in the plane of the drawing in Fig. 3 correspond to up and down in the longitudinal direction (i.e., the direction extending along the X axis) of the teach pendant 3.

As shown in Fig. 3, the teach pendant 3 has a T-shaped housing having thickness in the depth direction of the drawing. In the housing of the teach pendant 3, the wide portion of the T shape is provided with a monitor 30 as a display section on which, for example, information related to the operation of the welding robot 2 and teaching operation is displayed. Furthermore, a portion below the monitor 30, that is, the narrow portion of the T shape, is provided with an operation surface (arranged button section) 31 in which, for example, operation buttons for setting operation instruction information to the welding robot 2 and for setting teaching operation and a numerical keypad 34 for inputting numerical values are disposed.

As the operation buttons, for example, an arc on/off button 35, which is a switch for generating an electric arc at the tip of a wire of the welding tool 6, a wire supply button 36 for supplying a wire to the welding tool 6, and a position memory button 37 for storing the orientation of the welding robot 2 in, for example, teaching operation are provided.

In the housing of the teach pendant 3, handles (grip sections) 32 and 33 to be used by the operator M for holding the teach pendant 3 are provided at the left and right sides of the side where the operation surface 31 is provided. While facing the operation surface 31, the operator M holds the teach pendant 3 by gripping the right handle 32 with his/her right hand and the left handle 33 with his/her left hand. When the operator M holding the teach pendant 3 in this manner stands behind the welding robot 2 and looks toward the welding tool 6, the longitudinal direction of the teach pendant 3, which extends from the monitor 30 toward the operation surface 31, substantially extends along the X axis of the base coordinate system of the welding robot 2. In other words, the longitudinal direction of the teach pendant 3 corresponds to the X axis of the base coordinate system, that is, the front-rear direction of the operator M, and the width direction of the teach pendant 3 that is orthogonal to the longitudinal direction corresponds to the Y axis of the base coordinate system, that is, the left-right direction of the operator M.

In addition, the teach pendant 3 has twelve pentagonal operation buttons B1 to B12 that are disposed at the upper side of the operation surface 31, which is directly below the monitor 30, and are for setting operation instruction information for operating the welding tool 6 in the axial inching mode and the linear inching mode. The upper side of the operation surface 31 in the plane of the drawing in Fig. 3 is a movable range for the thumbs of the operator M holding the teach pendant 3 and is a region in which the operator M can freely move his/her thumbs without discomfort.

With regard to the twelve operation buttons B1 to B12, a left operation group having six operation buttons B1 to B6 arranged therein and a right operation group having six operation buttons B7 to B12 arranged therein are disposed adjacent to each other in the width direction of the teach pendant 3.

First, the layout of the six operation buttons B1 to B6 in the left operation group will be described.

First, the operation button B1 is a button for setting operation instruction information for operating the welding tool 6 in the X-axis positive direction in the linear inching mode and has a symbol "X" indicating the X axis and a symbol "+" indicating the positive direction. The operation button B2 disposed below the operation button B1 in the longitudinal direction of the teach pendant 3 is a button for setting operation instruction information for operating the welding tool 6 in the X-axis negative direction in the linear inching mode and has a symbol "X" indicating the X axis and a symbol "-" indicating the negative direction. In other words, the welding tool 6 moves toward the front side of the operator M by operating the operation button B1, and the welding tool 6 moves toward the rear side of the operator M by operating the operation button B2.

Accordingly, in the longitudinal direction of the teach pendant 3, the operation button B1 is disposed at the monitor side and the operation button B2 is disposed opposite the monitor with the operation button B1 interposed therebetween, such that the operation button B1 is disposed in the positive direction along the X axis and the operation button B2 is disposed in the negative direction. Thus, since the operation buttons B1 and B2 for operating the welding tool 6 along the X axis are arranged along the X axis, the welding tool operates toward the front side of the operator M by operating the operation button B1 disposed in the positive direction along the X axis. Moreover, the welding tool 6 operates toward the rear side of the operator M by operating the operation button B2 disposed in the negative direction along the X axis.

By arranging the operation buttons B1 and B2 in this manner, the welding tool 6 operates toward the front side of the operator M by operating the operation button B1 at the front side with reference to the line of vision of the operator M, and the welding tool 6 operates toward the rear side of the operator M by operating the operation button B2 at the rear side. Consequently, manipulation of the welding tool 6 that matches the senses of the operator M becomes possible.

Next, the operation button B3 is a button for setting operation instruction information for operating the welding tool 6 in the Y-axis positive direction in the linear inching mode and has a symbol "Y" indicating the Y axis and a symbol "+" indicating the positive direction. The operation button B4 disposed to the right of the operation button B3 in the width direction of the teach pendant 3 is a button for setting operation instruction information for operating the welding tool 6 in the Y-axis negative direction in the linear inching mode and has a symbol "Y" indicating the Y axis and a symbol "-" indicating the negative direction. In other words, the welding tool 6 moves toward the left side of the operator M by operating the operation button B3, and the welding tool 6 moves toward the right side of the operator M by operating the operation button B4.

Accordingly, the operation button B3 is disposed at the left side in the width direction of the teach pendant 3 and the operation button B4 is disposed at the right side similarly in the width direction, such that the operation button B3 is disposed in the positive direction along the Y axis and the operation button B4 is disposed in the negative direction. Thus, since the operation buttons B3 and B4 for operating the welding tool 6 along the Y axis are arranged along the Y axis, the welding tool 6 operates toward the left side of the operator M by operating the operation button B3 disposed in the positive direction along the Y axis. Moreover, the welding tool 6 operates toward the right side of the operator M by operating the operation button B4 disposed in the negative direction along the Y axis.

By arranging the operation buttons B3 and B4 in this manner, the welding tool 6 operates toward the left side of the operator M by operating the operation button B3 at the left side with reference to the line of vision of the operator M, and the welding tool 6 operates toward the right side of the operator M by operating the operation button B4 at the right side of the operator M. Consequently, manipulation of the welding tool 6 that matches the senses of the operator M becomes possible.

On the operation surface of the teach pendant 3, the operation buttons B1 and B2 and the operation buttons B3 and B4 are arranged in a cross-shaped pattern such that a line that connects the operation button B1 and the operation button B2 in the X-axis direction and a line that connects the operation button B3 and the operation button B4 in the Y-axis direction intersect to form the shape of a cross. By arranging the operation buttons for operating the welding robot 2 in the X-axis direction and the operation buttons for operating the welding robot 2 in the Y-axis direction in the cross-shaped pattern in this manner, the four operation buttons B1 and B4 can be readily operated with one thumb (e.g., the left thumb) of the operator M. Moreover, adjacent operation buttons can be simultaneously operated with one thumb.

As shown in Fig. 3, by disposing the left operation group (operation buttons B1 to B6) at a position operable with the left thumb and disposing the right operation group (operation buttons B7 to B12) at a position operable with the right thumb, the left operation group and the right operation group can also be simultaneously operated.

With the left operation group and the right operation group having the cross-shaped layout pattern, the operation buttons thereof are arranged in a pattern different from those of other surrounding operation buttons, so that the left operation group and the right operation group can be operated without having to visually check the operation buttons.

Furthermore, the aforementioned operation buttons arranged in the cross-shaped pattern may have protrusions serving as markers (i.e., shapes unique to individual operation buttons) added thereto, or a protrusion serving as a marker may be added between the left operation group and the right operation group. Accordingly, without having to visually check the multiple operation buttons arranged in the cross-shaped pattern, the left operation group and the right operation group can be sensuously distinguished from each other with the left and right thumbs and can thus be reliably operated without mistakes.

Furthermore, the center of gravity of the teach pendant 3 may be set between the left operation group and the right operation group. This may allow for stable operation using the left and right thumbs.

Moreover, in the left operation group, the operation buttons B5 and B6 are arranged to the right of the operation buttons B1 to B4 arranged in the cross-shaped pattern. The operation button B5 is a button for setting operation instruction information for operating the welding tool 6 in the Z-axis positive direction in the linear inching mode and has a symbol "Z" indicating the Z axis and a symbol "+" indicating the positive direction. The operation button B6 disposed below the operation button B5 in the longitudinal direction of the teach pendant 3 is a button for setting operation instruction information for operating the welding tool 6 in the Z-axis negative direction in the linear inching mode and has a symbol "Z" indicating the Z axis and a symbol "-" indicating the negative direction. In other words, the welding tool 6 moves toward the upper side of the operator M by operating the operation button B5, and the welding tool 6 moves toward the lower side of the operator M by operating the operation button B6.

Accordingly, in the arranged direction of the operation buttons B1 and B2, the operation button B5 is disposed at the operation button B1 side and the operation button B6 is disposed at the operation button B2 side. In other words, in the longitudinal direction of the teach pendant 3, the operation button B5 is disposed at the monitor side and the operation button B6 is disposed opposite the monitor with the operation button B5 interposed therebetween.

Thus, since the operation buttons B5 and B6 for operating the welding tool 6 along the Z axis are arranged in the front-rear direction as viewed from the operator M, the welding tool 6 operates toward the upper side of the operator M by operating the operation button B5 disposed at the front side as viewed from the operator M. By operating the operation button B6 disposed at the rear side of the operation button B5, the welding tool 6 operates toward the lower side of the operator M.

This layout of the operation buttons B5 and B6 on the plane of the operation surface extending in the front-rear direction or the left-right direction corresponds to the operation of the welding tool 6 in the up-down direction and matches the senses of the operator M, so that the welding tool 6 can be manipulated without discomfort.

In the teach pendant 3 according to this embodiment, functions for setting operation instruction information for rotating the first shaft J1 to the third shaft J3 in the positive direction or the negative direction in the axial inching mode are allocated to the operation buttons B1 to B6 in the left operation group arranged in the above-described manner.

As shown in Fig. 3, the operation button B1 has a symbol "J2" indicating the second shaft J2 and a symbol "+" indicating the positive direction (first direction), and a function for setting operation instruction information for rotating the second shaft J2 in the first direction is allocated to the operation button B1. The operation button B2 disposed below the operation button B1 in the longitudinal direction has a symbol "J2" indicating the second shaft J2 and a symbol "-" indicating the negative direction (second direction), and a function for setting operation instruction information for rotating the second shaft J2 in the second direction is allocated to the operation button B2.

Therefore, in the axial inching mode, when the operator M operates the operation button B1 at the front side with reference to the line of vision of the operator M, the second shaft J2 rotates in the first direction, causing the tip of the welding tool 6 to move toward the front side of the operator M in the X-axis direction (i.e., in a direction away from the operator). When the operator M operates the operation button B2 located toward the rear side of the operator M, the second shaft J2 rotates in the second direction, causing the tip of the welding tool 6 to move toward the rear side of the operator M in the X-axis direction (i.e., a direction toward the operator).

By allocating the functions for setting operation instruction information for rotating the second shaft J2 to the operation buttons B1 and B2 in this manner, manipulation of the welding tool 6 that matches the senses of the operator M becomes possible in the axial inching mode.

The operation button B3 has a symbol "J1" indicating the first shaft J1 and a symbol "+" indicating the positive direction (first direction), and a function for setting operation instruction information for rotating the first shaft J1 in the first direction is allocated to the operation button B3. The operation button B4 disposed to the right of the operation button B3 in the width direction of the teach pendant 3 has a symbol "J1" indicating the first shaft J1 and a symbol "-" indicating the negative direction (second direction), and a function for setting operation instruction information for rotating the first shaft J1 in the second direction is allocated to the operation button B4.

Therefore, in the axial inching mode, when the operator M operates the operation button B3 at the left side with reference to the line of vision of the operator M, the first shaft J1 rotates in the first direction, causing the tip of the welding tool 6 to move toward the left side of the operator M in the Y-axis direction. When the operator M operates the operation button B4 at the right side of the operator M, the first shaft J1 rotates in the second direction, causing the tip of the welding tool 6 to move toward the right side of the operator M in the Y-axis direction.

By allocating the functions for setting operation instruction information for rotating the first shaft J1 to the operation buttons B3 and B4 in this manner, manipulation of the welding tool 6 that matches the senses of the operator M becomes possible in the axial inching mode.

By allocating the functions for setting operation instruction information for rotating the first shaft J1 and the second shaft J2 to the operation buttons B1 to B4 in the above-described manner, the functions for rotating the first shaft J1 in the first direction and the second direction and the functions for rotating the second shaft J2 in the first direction and the second direction are realized by the operation buttons arranged in the cross-shaped pattern.

Furthermore, the operation button B5 has a symbol "J3" indicating the third shaft J3 and a symbol "+" indicating the positive direction (first direction), and a function for setting operation instruction information for rotating the third shaft J3 in the positive direction is allocated to the operation button B5. The operation button B6 disposed below the operation button B5 in the longitudinal direction of the teach pendant 3 has a symbol "J3" indicating the third shaft J3 and a symbol "-" indicating the negative direction (second direction), and a function for setting operation instruction information for rotating the third shaft J3 in the negative direction is allocated to the operation button B6.

Therefore, in the axial inching mode, when the operator M operates the operation button B5 at the front side with reference to the line of vision of the operator M, the third shaft J3 rotates in the first direction, causing the tip of the welding tool 6 to move toward the front side of the operator M in the X-axis direction (i.e., in the direction away from the operator). When the operator M operates the operation button B6 located toward the rear side of the operator M, the third shaft J3 rotates in the second direction, causing the tip of the welding tool 6 to move toward the rear side of the operator M in the X-axis direction (i.e., the direction toward the operator).

By allocating the functions for setting operation instruction information for rotating the third shaft J3 to the operation buttons B5 and B6 in this manner, manipulation of the welding tool 6 that matches the senses of the operator M becomes possible in the axial inching mode.

The layout of the operation buttons B1 to B6 in the left operation group has been described above. The right operation group has the operation buttons B7 to B12 arranged therein.

As shown in Fig. 3, the layout of the operation buttons B7 to B12 in the right operation group is similar to the layout of the operation buttons B1 to B6 in the left operation group in that the operation buttons B7 to B10 are arranged in a cross-shaped pattern in correspondence with the operation buttons B1 to B4. The operation buttons B11 and B12 are arranged to the right of the operation buttons B7 to B10, arranged in the cross-shaped pattern, in correspondence with the operation buttons B5 and B6.

The operation button B7 is a button for setting operation instruction information for rotating the welding tool 6 in the positive direction (first direction) in the direction extending about the Y axis with reference to the tip of the welding tool 6 as the center without changing the coordinates (X, Y, and Z coordinates) of the tip of the welding tool 6 in the linear inching mode. The operation button B7 has a symbol "R_{Y}" indicating Y-axis rotation and a symbol "+" indicating the first direction. The operation button B8 disposed below the operation button B7 in the longitudinal direction of the teach pendant 3 is also a button for setting operation instruction information for rotating the welding tool 6 in the negative direction (second direction) in the direction extending about the Y axis with reference to the tip of the welding tool 6 as the center. The operation button B8 has a symbol "R_{Y}" indicating Y-axis rotation and a symbol "-" indicating the second direction. In other words, when the operator M operates the operation button B7, the welding tool 6 is moved toward the front side of the operator M (i.e., in the direction away from the operator) and is changed in orientation without changing the coordinates (X, Y, and Z coordinates) of the tip of the welding tool 6. When the operator M operates the operation button B8, the welding tool 6 is moved toward the rear side of the operator M (i.e., in the direction toward the operator) and is changed in orientation.

Similar to the layout of the operation buttons B1 and B2, the above-described layout of the operation buttons B7 and B8 matches the directions in which the orientation of the welding tool 6 changes, thus allowing for manipulation of the welding tool 6 that matches the senses of the operator M.

Next, the operation button B9 is a button for setting operation instruction information for rotating the welding tool 6 in the positive direction (first direction) in the direction extending about the X axis with reference to the tip of the welding tool 6 as the center without changing the coordinates (X, Y, and Z coordinates) of the tip of the welding tool 6 in the linear inching mode. The operation button B9 has a symbol "Rx" indicating X-axis rotation and a symbol "+" indicating the first direction. The operation button B10 disposed to the right of the operation button B9 in the width direction of the teach pendant 3 is also a button for setting operation instruction information for rotating the welding tool 6 in the negative direction (second direction) in the direction extending about the X axis with reference to the tip of the welding tool 6 as the center. The operation button B10 has a symbol "Rx" indicating X-axis rotation and a symbol "-" indicating the second direction. In other words, when the operator M operates the operation button B9, the welding tool 6 is moved toward the left side of the operator M, when the tool tip is viewed from the base of the welding tool 6, and is changed in orientation without changing the coordinates (X, Y, and Z coordinates) of the tip of the welding tool 6. When the operator M operates the operation button B10, the welding tool 6 is moved toward the right side of the operator M, when the tool tip is viewed from the base of the welding tool 6, and is changed in orientation.

Similar to the layout of the operation buttons B3 and B4, the above-described layout of the operation buttons B9 and B10 matches the directions in which the orientation of the welding tool 6 changes, thus allowing for manipulation of the welding tool 6 that matches the senses of the operator M.

The operation button B11 is a button for setting operation instruction information for rotating the welding tool 6 in the positive direction (first direction) in the direction extending about the Z axis with reference to the tip of the welding tool 6 as the center without changing the coordinates (X, Y, and Z coordinates) of the tip of the welding tool 6 in the linear inching mode. The operation button B11 has a symbol "Rz" indicating Z-axis rotation and a symbol "+" indicating the first direction. The operation button B12 disposed to the right of the operation button B11 in the width direction of the teach pendant 3 is also a button for setting operation instruction information for rotating the welding tool 6 in the negative direction (second direction) in the direction extending about the Z axis with reference to the tip of the welding tool 6 as the center. The operation button B12 has a symbol "Rz" indicating Z-axis rotation and a symbol "-" indicating the second direction. In other words, when the operator M operates the operation button B11, the welding tool 6 is moved toward the left side of the operator M and is changed in orientation without changing the coordinates (X, Y, and Z coordinates) of the tip of the welding tool 6. When the operator M operates the operation button B12, the welding tool 6 is moved toward the right side of the operator M and is changed in orientation.

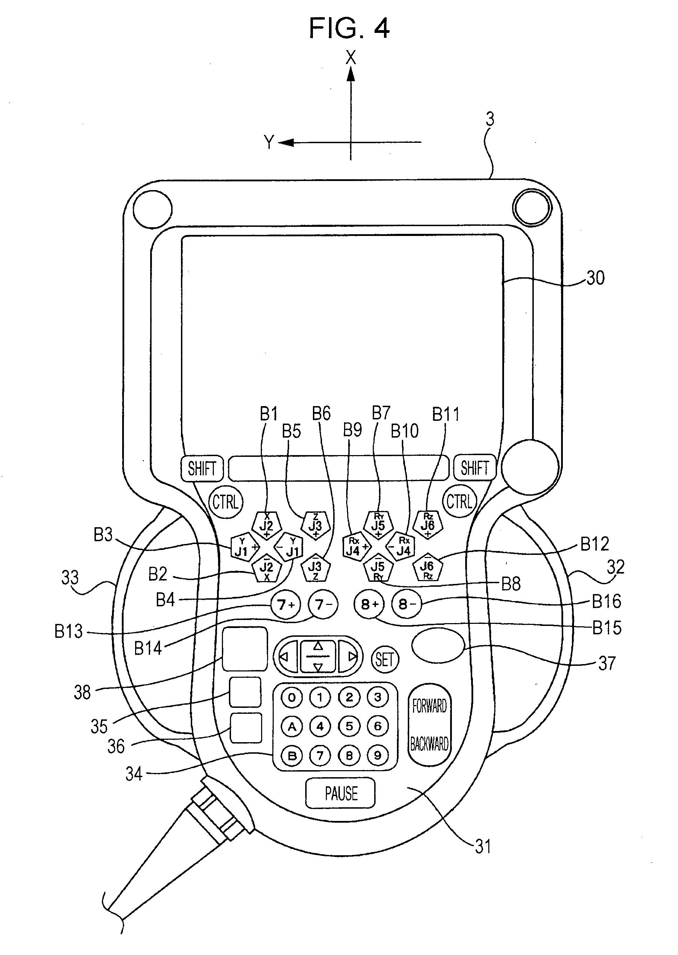

In the example shown in Fig. 3, the operation buttons B11 and B12 are arranged adjacent to each other at the left and right sides in the width direction of the teach pendant 3. In this layout, the four operation buttons B9 to B12 are arranged side-by-side, sometimes resulting in a dimensional increase in the width direction of the teach pendant 3. As shown in Fig. 4, the operation buttons B11 and B12 may be disposed above and below each other in the longitudinal direction of the teach pendant 3, such that the operation button B12 is disposed below the operation button B11 in the longitudinal direction of the teach pendant 3.

In the right operation group, functions for setting operation instruction information for rotating the fourth shaft J4 to the sixth shaft J6 in the first direction or the second direction in the axial inching mode are allocated to the operation buttons B7 to B12 arranged in the above-described manner.

As shown in Fig. 3, the operation button B7 has a symbol "J5" indicating the fifth shaft J5 and a symbol "+" indicating the positive direction (first direction), and a function for setting operation instruction information for rotating the fifth shaft J5 in the first direction is allocated to the operation button B7. The operation button B8 disposed below the operation button B7 in the longitudinal direction of the teach pendant 3 has a symbol "J5" indicating the fifth shaft J5 and a symbol "-" indicating the negative direction (second direction), and a function for setting operation instruction information for rotating the fifth shaft J5 in the second direction is allocated to the operation button B8. By operating the operation buttons B7 and B8, the welding robot 2 operates so as to rotate substantially about the Y axis. Thus, it appears to the operator M that the tip of the welding tool 6 moves forward and rearward in the X-axis direction.

The operation button B9 has a symbol "J4" indicating the fourth shaft J4 and a symbol "+" indicating the positive direction (first direction), and a function for setting operation instruction information for rotating the fourth shaft J4 in the first direction is allocated to the operation button B9. The operation button B10 disposed to the right of the operation button B9 in the width direction of the teach pendant 3 has a symbol "J4" indicating the fourth shaft J4 and a symbol "-" indicating the negative direction (second direction), and a function for setting operation instruction information for rotating the fourth shaft J4 in the second direction is allocated to the operation button B10. By operating the operation buttons B9 and B10, the welding robot 2 operates so as to rotate substantially about the X axis. Thus, it appears to the operator M that the tip of the welding tool 6 moves leftward and rightward in the Y-axis direction.

In this manner, the functions for setting operation instruction information for rotating the fourth shaft J4 and the fifth shaft J5 in the first direction or the second direction in the axial inching mode are allocated to the operation buttons B7 to B10 arranged in the cross-shaped pattern. Accordingly, similar to the operation buttons B1 to B4 in the left operation group, the arranged directions of the operation buttons B7 to B10 and the movement directions of the tip of the welding tool 6 match, thus allowing for manipulation of the welding tool 6 that matches the senses of the operator M.

The operation button B11 has a symbol "J6" indicating the sixth shaft J6 and a symbol "+" indicating the positive direction (first direction), and a function for setting operation instruction information for rotating the sixth shaft J6 in the first direction is allocated to the operation button B11. The operation button B12 disposed below the operation button B11 in the longitudinal direction of the teach pendant 3 has a symbol "J6" indicating the sixth shaft J6 and a symbol "-" indicating the negative direction (second direction), and a function for setting operation instruction information for rotating the sixth shaft J6 in the second direction is allocated to the operation button B12. By operating the operation buttons B11 and B12, the welding robot 2 operates so as to rotate substantially about the X axis. Thus, it appears to the operator M that the tip of the welding tool 6 moves leftward and rightward in the Y-axis direction.

By pressing a coordinate switch key 38, the linear inching mode is switched to the axial inching mode or the axial inching mode is switched to the linear inching mode. For example, if the linear inching mode is the default state, the linear inching mode is switched to the axial inching mode by pressing the coordinate switch key 38.

Accordingly, by pressing the coordinate switch key 38, the operation button B1 for setting operation instruction information for operating the welding tool 6 in the X-axis positive direction in the default linear inching mode functions as an operation button for setting operation instruction information for rotating the second shaft J2 in the first direction in the linear inching mode.

Finally, X-axis and Y-axis movement directions of the slider and the positioner that hold and move the welding robot 2 may be allocated to operation buttons B13 and B14 and operation buttons B15 and B16. In that case, the operation buttons B13 to B16 may be provided in directions corresponding to the movement directions of the slider and the positioner so as to be arranged in a cross-shaped pattern, similar to the operation buttons B1 to B4 and the operation buttons B7 to B10.

According to the teach pendant 3 having the layout of the operation buttons B1 to B12 in the left operation group and the right operation group, the layout of the operation buttons B1 to B12 matches the movement directions of the welding tool 6 for both the linear inching mode and the axial inching mode. Therefore, the welding robot 2 can be readily manipulated. Because the directions in which the welding tool 6 operates can be ascertained at a glance in accordance with the positions of the operation buttons, the movement direction of the welding tool 6 does not need to be checked by actually operating the operation buttons. Thus, the teach pendant 3 of the robot system 1 according to this embodiment is advantageous in that the manipulation becomes faster and the occurrence of mistakes is reduced especially in the teaching process, so that the level of fatigue for the operator M can be reduced.

Furthermore, in the teach pendant 3 according to the above embodiment, since the directions in which the welding tool 6 operates can be ascertained at a glance in accordance with the positions of the operation buttons, it is not necessary to provide an operating device, such as a joystick, in addition to the operation buttons B1 to B12 for instructing J1 to J6, as in the teach pendant in the related art. Therefore, the manufacturing costs of the teach pendant can be minimized.

Furthermore, in the above embodiment, the teach pendant 3 having the operation buttons B1 to B12 arranged in directions corresponding to the movement directions of the welding tool 6 has been described. Alternatively, the teach pendant 3 may have the operation buttons B1 to B12 arranged in directions corresponding to the movement directions of the arm of the welding robot 2. In that case, similar advantages can be achieved.

The embodiment disclosed here is exemplary in all aspects and should not be considered to be limitative. In particular, in the embodiment disclosed here, matters not clearly disclosed, such as operating conditions, measurement conditions, various parameters, and dimensions, weights, and volumes of components, are values that do not depart from the scope normally implemented by a skilled person and are obvious to a normal skilled person.

The present application is based on Japanese Patent Application No. 2013-027948 filed on February 15, 2013, the contents of which are hereby incorporated by reference.

### Reference Signs List

- 1: robot system
- 2: welding robot
- 3: teach pendant
- 4: control device
- 5: personal computer
- 6: welding tool
- 30: monitor
- 31: operation surface (arranged button section)
- 32, 33: handles (grip sections)
- 34: numerical keypad
- 35: arc on/off button
- 36: wire supply button
- 37: position memory button
- 38: coordinate switch key
- B1 to B16: operation buttons
- M: operator

## Claims

1. A teach pendant for an articulated robot, the teach pendant including an arranged button section having a plurality of buttons disposed therein for setting operation instruction information for the articulated robot on a tip of which a tool is attached, the teach pendant giving a movement instruction to the articulated robot as a result of the operation instruction information being set using the buttons,
wherein the plurality of buttons in the arranged button section are arranged in directions that correspond to movement directions of the tool or an arm, which are based on movement instructions given to the articulated robot in accordance with the operation instruction information.

2. The teach pendant for the articulated robot according to Claim 1,
wherein the plurality of buttons are capable of setting the operation instruction information to the articulated robot in either one of a linear inching mode for instructing a movement direction of the tool and an axial inching mode for instructing a movement direction of each joint axis of the articulated robot, and
wherein the plurality of buttons in the arranged button section are arranged in the directions that correspond to the movement directions of the tool or the arm whether the operation instruction information is set in accordance with either one of the linear inching mode and the axial inching mode.

3. The teach pendant for the articulated robot according to Claim 1 or 2,
wherein the plurality of buttons in the arranged button section are arranged in the directions that correspond to the movement directions of the tool, which extend along an X axis and a Y axis of coordinates set in the articulated robot.

4. The teach pendant for the articulated robot according to Claim 3,
wherein the arranged button section includes
two buttons that are arranged along the X axis and are for setting operation instruction information corresponding to movement of the tool along the X axis, and
two buttons that are arranged along the Y axis and are for setting operation instruction information corresponding to movement of the tool along the Y axis, and
wherein the two buttons arranged along the X axis and the two buttons arranged along the Y axis are arranged in a cross-shaped pattern.
